# FASCICULE DE BREVET EUROPEEN

(11) **EP 2 053 788 B1**
(45) Date de publication et mention de la délivrance du brevet: **04.11.2015**
(21) Numéro de dépôt: 08163744.9
(22) Date de dépôt: 05.09.2008
(51) Int. Cl.: H04L 12/28, H04L 1/18, H04W 4/18, H04W 16/32, H04W 28/06, H04W 72/00, H04L 1/00

(54) **Système de transfert de contenus en couches en mode broadcast et/ou unicast, à des terminaux mobiles rattachés à un réseau à couverture radio non uniforme et à mécanisme de transfert discontinu de contenus**
Übertragungssystem von Schichtdaten im Broadcast- und/oder Unicastmodus an mobile Endgeräte, die an ein nicht gleichförmiges Funkkontaktnetz angeschlossen sind, und diskontinuierlicher Übertragungsmechanismus dieser Daten
System for transferring content in layers in broadcast and/or unicast mode to mobile terminals connected to a cellular network with uneven radio coverage and with a mechanism for intermittent transfer of content

(30) Priorité: 22.10.2007 FR 0758450
(43) Date de publication de la demande: 29.04.2009
(73) Titulaire: ALCATEL LUCENT, 92100 Boulogne-Billancourt (FR)
(72) Inventeur: Alberi Morel, Marie-Line, 94230, CACHAN (FR); Leprovost, Yann, 91620, NOZAY (FR); Marin, Cedric, 91310, MONTLHERY (FR); Kerboeuf, Sylvaine, 91140, Villebon-sur-Yvette (FR)
(74) Mandataire: Sciaux, Edmond

(56) Documents cités:
- WO-A-03/036911
- DE-A1- 10 025 725
- US-A1- 2004 081 199
- ALCATEL: "4G Mobile" INTERNET CITATION, [Online] 31 mai 2005 (2005-05-31), XP002383333 Extrait de l'Internet: URL:http://www.alcatel.com/com/en/appconte nt/apl/A0506-4G_Mobile_EN_tcm17 2-262201635.pdf> [extrait le 2006-05-30]
- ANONYMOUS: "Optimized Delivery of Audio&Video Streaming over Wireless Networks"[Online] 21 décembre 2006 (2006-12-21), pages 1-2, XP002457797 Extrait de l'Internet: URL:http://www1.alcatel-lucent.com/podcast /innovation/pdf/audiovideo_streaming.pdf> [extrait le 2007-11-06]
- YINGWEI CHEN ET AL: "Channel adaptive prioritized transmission of layered video over wireless LAN" PERSONAL, INDOOR AND MOBILE RADIO COMMUNICATIONS, 2003. PIMRC 2003. 14 TH IEEE PROCEEDINGS ON SEPT. 7-10, 2003, PISCATAWAY, NJ, USA,IEEE, vol. 2, 7 septembre 2003 (2003-09-07), pages 2948-2952, XP010678566 ISBN: 978-0-7803-7822-3

## Description

L'invention concerne les réseaux de communication radio à couverture radio non uniforme et mettant en oeuvre un mécanisme de transfert discontinu de contenus, et plus précisément le transfert de contenus en couches, éventuellement multimédia, entre un serveur de contenus et au moins un terminal de communication radio connecté à un réseau radio du type précité.

On entend ici par « réseau de communication radio à couverture radio non uniforme » un réseau comprenant un réseau d'accès radio dans lequel la qualité de réception (ou qualité du lien (ou liaison) radio) varie es fonction de la position au sein de la zone de couverture radio, Il est rappelé que la qualité de réception (ou qualité du lien radio) est quantifiable au moyen de paramètres comme par exemple le CIR (pour « Carrier to Interference Ratio » - rapport entre la puissance du signal reçu et la somme des puissances du bruit interne du récepteur et du bruit d'interférence provoqué par l'environnement) ou le BER (« Bit Error Rate » - taux d'erreur de bits reçus) ou encore le PER (pour « Packet Error Rate » taux de paquets erronés reçus). En présence de telles discontinuités de la qualité de réception, il est donc possible de décomposer la zone de couverture radio en sous-zones de niveaux de qualité de réception différents. L'invention se rapporte en particulier aux réseaux d'accès radio aptes à transmettre des données selon un premier mode, qui peut être un mode dit de diffusion (ou « broadcast ») ou bien un mode dit point-à-multipoints (ou « multicast »), et selon un deuxième mode, dit point-à-point (ou « unicast »).

Par ailleurs, on entend ici par « mécanisme de transfert discontinu de contenus » un mécanisme consistant à favoriser le transfert de contenus vers les terminaux mobiles lorsque ces derniers se trouvant momentanément situés dans les sous-zones dont le niveau de qualité de réception est le plus élevé, lesquelles constituent une zone généralement appelée « zone de transfert optimal ». Plus précisément, lorsqu'une application d'un terminal mobile a requis un contenu, ce dernier lui est transmis selon un débit qui est très supérieur à son débit normal d'utilisation par l'application requérante lorsque ledit terminal mobile se trouve momentanément situé dans une zone de transfert optimal Le terminal mobile (ou l'application requérante) comprend alors une mémoire tampon (ou cache) dans laquelle il (elle) stocke temporairement le contenu transféré selon un haut débit, ce qui permet de continuer d'alimenter l'application en contenu lorsque ledit terminal mobile quitte la zone de transfert optimal et se retrouve momentanément dans une sous-zone où le transfert de contenu n'est en principe pas autorisé. On notera que le mécanisme autorise malgrè tout les tentatives de transfert de contenu en dehors des zones de transfert lorsqu'un certain niveau de qualité de service (QoS) doit être garanti, dans le but d'éviter une interruption de service au niveau de l'application. On notera également que ce mécanisme, qui est notamment décrit dans les documents brevet EP 1549096 et EP 1793554, peut nécessiter la connaissance des informations relatives à la mobilité des terminaux mobiles.

De plus, on entend ici par «contenu multimédia en couches » un ensemble de données agencé en couches de scalabilité, comprenant typiquement une couche dite de base (en anglais « base layer ») et une ou plusieurs couches dite d'amélioration (en anglais « enhancement layer ») complémentaires de la couche de base. La couche de base comprend l'ensemble des données d'un contenu multimédia qui va permettre à un équipement récepteur de reproduire ce contenu multimédia avec la qualité (ou définition ou résolution) la plus baisse. Chaque couche d'amélioration comprend un autre ensemble de données dudit contenu multimédia qui va permettre audit terminal de communication de compléter l'ensemble de données de la couche de base afin de reproduire le contenu multimédia avec une qualité (ou définition ou résolution) améliorée. Selon certains procédés d'encodage par couches les différentes couches sont liées hiérarchiquement entre telles, de sorte que la même couche d'amélioration d'un contenu multimédia ne peut être utilisée qu'à condition que la couche de base et les n-1 couches d'amélioration précédentes de ce contenu multimédia (associées à des quantités (ou définitions ou révolutions) inférieures) ont été exploitées. Selon d'autres procédés, seule une hiérarchie entre la couche de base et la ou les couche(s) d'amélioration existe, de sorte que la n-ième couche d'amélioration d'un contenu multimédia vient améliorer la qualité du contenu (par exemple augmentation du nombre de pixels d'une image, augmentation de la qualité d'image evou augmentation de la fréquence de rafraîchissement des images) tel que décodé à partir de la couche de base sans qu'il soit nécessaire d'avoir préalablement exploité l'une des n-1 couches précédentes. Un contenu multimédia ainsi encodé en couches pourra par exemple être un programme de télévision ou de radio, un fichier audio ou une vidéo.

Comme le sait l'homme de l'art, la transmission à des terminaux mobiles (ou portables) de contenus, comme par exemple des vidéos ou des programmes de télévision, nécessite souvent des débits élevés, ce qui peut poser des difficultés lorsque les ressources radio du réseau d'accès radio utilisé doivent être partagées entre de nombreux clients. Afin de limiteur la quantité de ressources radio utilisée pour la transmission de contenus à des terminaux mobiles, on peut utiliser un mode dit de diffusion (ou « broadcast ») et/ou un mode dit point-à-multipoints (ou « multicast »). Cependant, dans certains réseaux d'accès radio, la qualité des liens radio peut varier dans le temps et/ou dans l'espace. C'est notamment le cas lorsque la zone de couverture radio est non uniforme. Il en résulte que le débit maximal de transmission d'un contenu peut varier dans le temps et/ou dans l'espace, et donc la qualité du contenu reçu par un terminal peut également varier dans le temps, notamment lorsque son utilisateur se déplace au sein de la zone de couverture radio.

Afin que tous les utilisateurs de terminaux puissent disposer d'une même qualité de contenu quelle que soit leur position géographique dans une zone de couverture radio, le débit qui est choisi pour leur transmettre les contenus est celui que l'on peut effectivement obtenir dans 1a partie la moins favorable de cette zone de couverture radio (généralement sur ses bords).

Cette solution n'étant pas satisfaisante, il a été proposé de

décomposer les contenus en couches de données complémentaires au niveau de la couche applicative et de transmettre dans des flux différents les paquets de données des différentes couches. Par conséquent, les utilisateurs dont les terminaux sont situés dans une sous-zone bénéficiant de bonnes conditions radio reçoivent les paquets de données de toutes les couches complémentaires et disposent ainsi de contenus de qualité optimale, tandis que les utilisateurs dont les terminaux bénéficient de mauvaises conditions radio ne reçoivent que les paquets de données de la couche de base et disposent donc de contenus de qualité inférieure. Cela résulte du fait que la transmission des paquets de données des couches d'amélioration est beaucoup plus sensible aux conditions radio que celle des paquets de données de la couche de base. On comprendra que lorsqu'un utilisateur se déplace d'une sous-zone bénéficiant de bonnes qualités radio vers une sous-zone bénéficiant de mauvaises qualités radio, la qualité du contenu qu'il reçoit diminue, ce qui peut s'avérer gênant.

L'invention a donc pour but de remédier au moins partiellement à cet inconvénient dans un réseau d'accès radio à couverture radio non uniforme (voire discontinue) et mettant en oeuvre un mécanisme de transfert discontinu de contenus. Elle permet notamment qu'un utilisateur continue à utiliser un contenu de qualité élevée, au moins pendant quelques instants, lorsqu'il se déplace d'une sous-zone bénéficiant de bonnes qualités radio vers une sous-zone bénéficiant de qualités radio (notablement) moins bonnes.

Elle propose à cet effet un système dédié au transfert de contenus, selon la revendication 1.

Il est aussi connu la publication d'Alcatel « 4G Mobile » publiée dans la revue Alcatel Télécommunications Review au deuxième trimestre 2015 et la demande de brevet américain référence US2004/081199.

L'invention propose également un terminal de communication mobile, selon la revendication 8, un équipement de réseau destiné à faire partie d'un réseau de communication radio, selon la revendication 9, et un procédé, dédié au transfert de contenus issus d'un serveur de contenus selon la revendication 10.

L'invention est particulièrement bien adaptée, bien que de façon non exclusive, aux réseaux de communication radio de type mobile ou cellulaire. Mais, d'une manière générale elle concerne tout type de réseau radio, comprenant un réseau d'accès radio à couverture radio non uniforme (voire discontinue) et mettant en oeuvre un mécanisme de transfert discontinu de contenus.

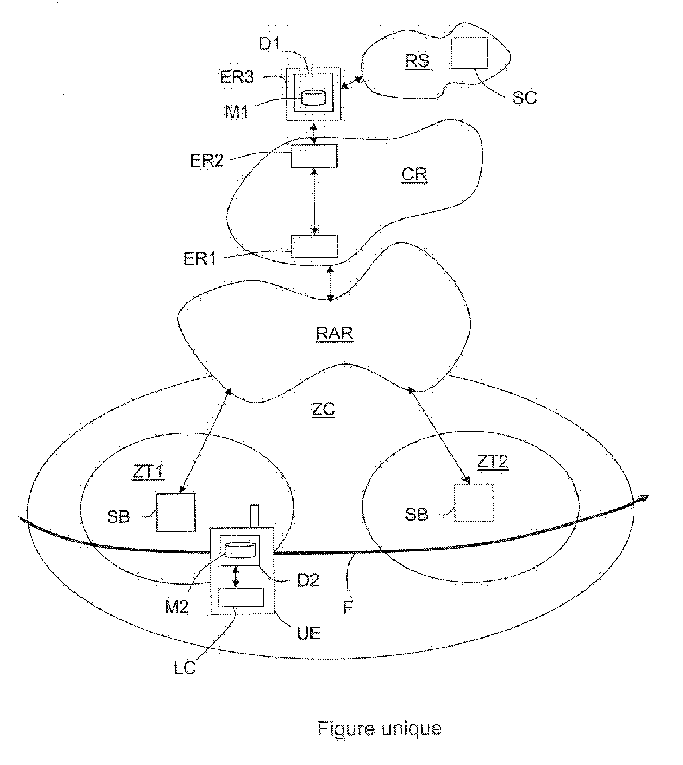

D'autres caractéristiques et avantages de l'invention apparaîtront à l'examen de la description détaillée ci-après, et du dessin annexé, sur lequel l'unique figure illustre de façon très schématique un exemple de réalisation d'un système de transfert de contenus selon l'invention implanté en partie dans un téléphone mobile connecté à un réseau de téléphonie mobile (auquel est connecté un serveur de contenus en couches) et en partie dans un équipement de réseau dudit réseau de téléphonie mobile.

Le dessin annexé pourra non seulement servir à compléter l'invention, mais aussi contribuer à sa définition, le cas échéant.

L'invention a pour objet de permettre le transfert de contenus vers des terminaux de communication mobiles connectés à un réseau de communication radio comprenant un réseau d'accès radio à couverture radio non uniforme, grâce au mécanisme de transfert discontinu de contenus (en anglais « caching mechanism ») combiné au format des contenus encodés selon une méthode d'encodage en couches de scalabilité (en anglais « scalable contents »).

Dans ce qui suit, on considère à titre d'exemple non limitatif que le réseau de communication radio est un réseau de téléphonie cellulaire (ou mobile). Mais, l'invention n'est pas limitée à ce type de réseau de communication radio. Elle concerne en effet tous les réseaux de communication radio à couverture radio non uniforme, voire discontinue, et donc comprenant un réseau d'accès radio dans lequel la qualité de réception (ou qualité du lien radio) varie en fonction de la position au sein de sa zone de couverture radio, mettant en oeuvre un mécanisme de transfert discontinu de contenus et capable de transmettre des contenus en couches en modes de diffusion (broadcast) ou point-à-multipoints (multicast) et point-à-point (unicast). L'invention concerne donc aussi bien des réseaux mobiles (ou cellulaires) que des réseaux locaux sans fil (ou WLAN).

Par ailleurs, dans ce qui suit on entend par « terminal de communication radio » tout équipement de communication (UE) muni d'une application (LC) utilisant des contenus (éventuellement multimédia) et capable d'échanger des données sous la forme de signaux radio avec une station de base ou un point d'accès d'un réseau d'accès radio d'un réseau radio, Il pourra donc s'agir, par exemple, d'équipements d'utilisateurs, tels que des téléphones mobiles (ou cellulaires) ou des ordinateurs portables ou des assistants personnes numériques (ou PDA) munis d'un équipement de communication radio.

On considère dans ce qui suit que les terminaux de communication radio sont des téléphones mobiles UE équipés d'une application LC dédiée à la lecture de contenus définissant des vidéos, par exemple au format MPEG4. L'application LC se présente donc ici sous la forme d'un lecteur (éventuellement enregistreur), plus connu sous l'expression anglaise « média player », chargé de diffuser des vidéos reçues sur l'écran du téléphone mobile UE.

On notera que l'invention n'est pas limitée à ce type d'application LC. Elle concerne en effet toute application utilisant tout type de contenu (multimédia ou non) transmis sous la forme de blocs de données (par exemple des paquets, éventuellement de type IP) et provenant d'un serveur de contenus SC connecté au réseau radio auquel est connecté le téléphone mobile UE qui la contient, ou qui est joignable via ce réseau radio. A titre d'exemple non limitatif, le serveur de contenus SC peut être un serveur IP.

On notera que l'application LC comprend habituellement une mémoire de faible capacité de stockage (non représentée).

Comme cela est illustré sur l'unique figure, un réseau (de téléphonie) mobile (par exemple de type UMTS) peut, d'une façon très schématique mais néanmoins suffisante à la compréhension de l'invention, être résumé à un coeur de réseau (ou « Core Network » en anglais) CR couplé à un réseau d'accès radio RAR, lui-même raccordé à un système de gestion de réseau ou NMS (pour « Network Management System »), non représenté.

Le réseau d'accès radio RAR comporte principalement des stations de base SB (appelées Node_Bs dans le cas d'un réseau UMTS ou Base Station dans le cas d'un réseau local WiMAX) et des contrôleurs de réseau radio ou noeuds (appelés RNCs dans le cas d'un réseau UMTS, et non représentés), raccordés entre eux.

Chaque station de base SB est associée à au moins une cellule (logique) couvrant une partie de la zone de couverture radio ZC du réseau d'accès radio RAR et dans laquelle des terminaux mobiles UE peuvent établir (ou poursuivre) des liaisons radio, et notamment recevoir des contenus transmis en modes de diffusion (broadcast) ou point-à-multipoints (multicast) et point-à-point (unicast). Chaque contrôleur de réseau radio est associé à au moins une cellule (logique) et est donc couplé à au moins une station de base SB.

Le réseau d'accès radio RAR ayant une couverture radio non uniforme, sa zone de couverture radio ZC comporte des sous-zones, appelées zones de transfert optimal ZTi, dans lesquelles le niveau de qualité de réception moyen est le plus élevé et où le transfert discontinu de contenus est autorisé. Une station de base SB à émission/réception sensiblement isotrope est généralement située sensiblement au centre d'une zone de transfert optimal ZTi. Dans l'exemple illustré seules deux zones de transfert optimal ZT1 et ZT2 ont été représentées. Mais, le nombre de zones de transfert optimal ZTi peut prendre n'importe quelle valeur supérieure ou égale à un (1).

Le coeur de réseau CR comprend des équipements de réseau qui pour certains sont raccordés notamment aux contrôleurs de réseau radio. Parmi ces équipements on peut notamment citer dans le cas d'un réseau de type 2,5G ou 3G au moins un noeud SGSN (pour « Serving GPRS Support Node ») ER1, raccordé notamment à des contrôleurs de réseau radio, et au moins un noeud GGSN (pour « Gateway GPRS Support Node ») ER2 connecté au noeud SGSN et assurant la connexion du coeur de réseau CR à un réseau de services RS (par exemple de type IP) matérialisant les services mis à la disposition des utilisateurs des terminaux mobiles UE par l'opérateur du réseau UMTS, et en particulier les services de diffusion de contenus (comme par exemple des données multimédia constituant des vidéos). Dans l'exemple non limitatif illustré, le serveur de contenus SC fait partie du réseau de services RS, mais cela n'est pas obligatoire.

L'invention propose un système destiné à transférer des contenus en couches, issus du serveur de contenus SC, vers au moins un téléphone mobile UE connecté au réseau d'accès radio RAR (à couverture radio non uniforme), et donc présent à l'intérieur de sa zone de couverture ZC.

Comme illustré sur l'unique figure, ce système comprend essentiellement des premier D1 et second(s) D2 dispositifs. Le premier dispositif D1 est implanté dans le réseau radio, et plus précisément en amont d'une entrée de son réseau d'accès radio RAR, tandis que chaque second dispositif D2 est implanté dans un téléphone mobile UE. L'expression « en amont » signifié ici dans le coeur de réseau CR du réseau ou dans une plateforme (ou un réseau) de service RS et non du côté du réseau d'accès radio RAR du réseau radio.

On notera que dans l'exemple non limitatif illustré le premier dispositif D1 est implanté dans un équipement (ou élément) de réseau ER3 qui est placé, par exemple dans le cas d'un réseau de type UMTS (3G), en amont de l'entrée d'un noeud GGSN ER2 du réseau. Cet équipement de réseau ER3 est par exemple de type serveur. Par ailleurs, il est important de noter que le premier dispositif D1 peut être constitué de plusieurs éléments ou modules implémentant des fonctionnalité différentes et complémentaires (dans le cadre de invention), couplés entre eux, et pouvant être éventuellement séparés physiquememt les uns des autres et donc pouvant faire partie d'équipements (ou d'éléments) de réseau différents.

Le premier dispositif D1 intervient chaque fois que le serveur de contenus SC lui transmet des données qui définissent un contenu en couches et qui doivent être transmises à un ensemble choisi (voire même tous les) utilisateurs présents dans la zone de couverture ZC du réseau radio RAR.

Dans ce qui suit, on considère à titre d'exemple non limitatif que les contenus multimédia (ici des vidéos), qui sont transmis par le serveur (de contenus) SC au premier dispositif D1, sont agencés en deux couches complémentaires, l'une étant une couche de base (ou « base layer »), et l'autre étant une couche d'amélioration (ou « enhancement layer ») destinée à améliorer la qualités (ou définition ou résolution) offerte par la couche de base lorsqu'elle est combinée à cette dernière. Mais, l'invention n'est pas limitée à ce nombre (2) de couches complémentaires. Ce nombre peut en effet être aussi grand que l'on veut dès lors qu'il est au moins égal à deux (2).

Par exemple, le serveur (de contenus) SC encapsule et multiplexe les données des couches de chaque contenu en RTP/UDP/IP, et les transmet au premier dispositif D1 sous la forme d'un flux de paquets de données conforme au protocole de transport RTP (pour « Rapid Transfer Protocol »). Chaque paquet comporte au moins un entête contenant notamment une adresse (IP) de broadcast ou de multicast de destination, désignant les adresses (IP) de plusieurs terminaux d'utilisateurs destinataires du contenu dont il fait partie, et une adresse de port source UDP, désignant la couche dont il fait partie.

Chaque contenu est transmis par le serveur SC dans le cadre d'une session de transmission de contenu(s) qui est partagée par un ensemble de terminaux UE. Par conséquent, au commencement de la session partagée le réseau d'accès radio RAR fournit à chaque terminal UE, qui se trouve situé dans sa zone de couverture ZC et qui participe a une session partagée de transmission de contenu(s) avec le serveur SC, une liaison broadcast ou multicast de transfert de contenu ainsi qu'une liaison unicast de transfert de contenu. Ces liaisons broadcast ou multicast et unicast sont alors utilisables par le terminal UE pendant toute la durée de la session, y compris pour l'échange de messages de service ou de contrôle.

Lorsque le premier dispositif D1 reçoit le flux de paquets de données d'un contenu, il commence par séparer (démultiplexer) les paquets en fonction de leurs couches d'appartenance (qui sont désignées par des adresses de port source UDP différentes). De préférence, il associe un niveau de priorité à chaque paquet séparé en fonction de sa couche d'appartenance, Egalement de préférence, il adjoint à chaque paquet séparé de chaque couche d'un contenu une étiquette (ou « tag ») qui définit la couche à laquelle il appartient et le contenu dont il fait partie.

Puis, il stocke temporairement, par exemple dans une mémoire tampon (ou cache) M1, les paquets de données de chaque couche d'amélioration du contenu, et fournit immédiatement au réseau d'accès radio RAR les paquets de données de la couche de base de ce contenu, après leur avoir attribué un niveau de priorité élevé, afin qu'il les transmette aux terminaux UE (qui sont désignés par l'adresse (IP) de broadcast ou de multicast de destination contenue dans les entêtes des paquets) en mode broadcast ou multicast, dans toute sa zone de couverture ZC.

La partie du premier dispositif D1 qui constitue ou comporte la mémoire cache M1 est ce que l'homme de l'art appelle en anglais un « proxy/cache » (équipement intermédiaire à mémoire cache).

Le premier dispositif D1 fournit également au réseau d'accès radio RAR des données de l'une au moins des couches d'amélioration du contenus reçu pour qu'il les transmette à au moins un terminal UE, au moins s'il est situé dans l'une de ses zones de transfert optimal ZTi. Cette transmission se fait en mode broadcast ou multicast et/ou en mode unicast éventuellement selon le mécanisme de transfert discontinu, c'est-à-dire selon un débit de transfert qui est (très) supérieur au débit nécessaire a leur application LC pour lire les contenus, et si le terminal UE concerné est situé dans une zone de transfert optimal ZTi.

Le choix du mode de transmission dépend du mode de mise en oeuvre choisi au niveau du premier dispositif D1. Au moins trois modes de mise en oeuvre peuvent être envisagés.

Dans un premier mode de mise en oeuvre, le premier dispositif D1 est agencé de manière à fournir au réseau d'accès radio RAR, immédiatement après les avoir reçus du serveur 80 et après leur avoir attribué un niveau de priorité élevé, et au moins lors du démarrage du service (ou session), non seulement les paquets de données de la couche de base d'un contenu (comme indique ci-dessus), mais également les paquets de données de chaque couche d'amélioration de ce même contenu, sans modification de l'adresse (IP) de broadcast ou de multicast de destination qui est contenue dans leur entête. Le réseau d'accès radio RAR est alors également chargé de transmettre ces paquets de(s) couches d'amélioration aux terminaux UE (qui sont désignés par Adresse (IP) de broadcast ou de multicast de destination contenue dans les entêtes des paquets) en mode broadcast ou multicast, dans toute sa zone de couverture ZC.

Comme indiqué précédemment, la transmission des paquets des couches d'amélioration étant beaucoup plus sensible aux conditions radio que celle des paquets de la couche de base, c'est principalement lorsqu'un terminal UE est situé dans une zone de transfert optimal ZTi qu'il peut recevoir les paquets des couches d'amélioration. Par conséquent, dans le premier mode de mise en oeuvre on prévoit une procédure de retransmission des paquets d'une couche d'amélioration qui n'ont pas été reçus ou qui n'ont pas pu être décodés de façon correcte par le second dispositif D2 d'un terminal UE.

Cette procédure de retransmission est initiée par le second dispositif D2 d'un terminal UE lorsqu'il détecte que des paquets de données d'une couche d'amélioration n'ont pas été reçus ou n'ont pas pu être décodés correctement. Chaque fois que cette situation se produit, le second dispositif D2 génère un message de signalisation dédié désignant le(s) paquet(s) à retransmettre et ordonne à son terminal UE de le(s) transmettre au premier dispositif D1, via le réseau d'accès radio RAR. Ces messages de signalisation dédiés sont par exemple des rapports de réception de contenu conformes au protocole de contrôle RTCP (pour « Real time Transport Control Protocol »). Tout autre protocole dédié au transport de données de service dans le cadre de session(s) peut être utilisé.

Lorsque le premier dispositif D1 reçoit d'un terminal UE un message de signalisation désignant des paquets de l'une au moins des couches d'amélioration d'un contenu à retransmettre, il accède à sa mémoire cache M1 afin de récupérer les paquets désignés. Puis, il fournit au réseau d'accès radio RAR les paquets de données récupérés (non reçus par le terminal UE). après avoir remplacé l'adresse IP de diffusion ou point-à-multipoints contenue dans leur entête par l'adresse IP du terminal UE concerné, et de préférence après leur avoir associé un niveau de priorité fonction d'au moins un paramètre choisi. Le réseau d'accès radio RAR est ainsi « contraint » par le premier dispositif D1 à retransmettre au terminal UE concerné les paquets fournis en mode unicast, sous forme de rafales (ou « bursts ») de paquets selon un débit de transfert qui est (très) supérieur au débit qui est nécessaire a leur application LC pour lire les contenus et en fonction du niveau de priorité qui leur a été associé, tandis que les paquets de la couche de base sont transmis aux terminaux UE selon un débit de transfert qui est sensiblement le même que celui de leur application LC (conformément au mécanisme de transfert discontinu).

La retransmission des paquets en rafales (conformément au mécanisme de transfert discontinu) est rendue possible par le fait que les paquets de chaque couche d'amélioration sont stockés temporairement dès réception dans la mémoire M1 de type cache du premier dispositif D1.

On notera que le premier dispositif D1 ne retransmet de préférence les paquets non reçus d'une couche d'amélioration, sous forme de rafale (ou burst), qu'à condition que le terminal UE soit momentanément situé dans une zone de transfert optimal ZTi. C'est en effet à l'intérieur d'une telle zone de transfert optimal ZTi que la probabilité qu'il reçoive correctement les paquets non reçus est la plus élevée. Pour ce faire, le premier dispositif D1 doit connaître les positions respectives des terminaux UE qui participent à une session partagée de transfert de contenus. Ces positions peuvent être soit obtenues par le premier dispositif D1 auprès du réseau, soit fournies au premier dispositif D1 par les terminaux UE via l'une des liaisons mises à leur disposition par le réseau d'accès radio RAR dans le cadre de la session partagée à laquelle ils participent.

Le niveau de priorité des paquets d'une rafale qui est destinée à un terminal UE est fonction d'au moins un paramètre. Chaque paramètre peut par exemple être choisi parmi la qualité de la liaison radio unicast établie entre le réseau d'accès radio RAR et ce terminal UE, le niveau (ou taux) de remplissage en données de contenu reçues du second dispositif D2 de ce terminal UE, et le niveau d'importance de la couche d'amélioration à laquelle appartiennent les paquets de données de la rafale. A titre d'exemple, le premier dispositif D1 peut déterminer un niveau de priorité en fonction de deux ou trois des exemples de paramètre précités. Le premier dispositif D1 peut être informé du niveau (ou taux) de remplissage en données de contenu d'un second dispositif D2 par ce dernier, au moyen d'un message de contrôle.

Chaque second dispositif D2, selon l'invention, comprend par exemple une mémoire tampon (ou cache) M2 dans laquelle il stocke temporairement les données des couches de base et d'amélioration contenues dans les paquets reçus, en correspondance de l'étiquette qui leur a été précédemment adjointe par le premier dispositif D1, et à laquelle il accède pour reconstituer chaque contenu qu'elles constituent. Les portions de contenu reconstituées sont successivement transmises par le second dispositif D2 à l'application LC de son terminal UE, sensiblement selon son débit de lecture.

On comprendra que seules sont utilisées les données des couches d'amélioration qui correspondent temporellement aux données de la couche de base. Par conséquent, les données des couches d'amélioration qui correspondent temporellement à de futures données de la couche de base, pas encore reçues, restent stockées dans la mémoire M2 jusqu'à l'arrivée des données de la couche de base qui leur correspondent temporellement, En d'autres termes, ces données restantes des couches d'amélioration pourront être utilisées par le second dispositif D2 pendant un certain temps lorsque son terminal UE ne recevra plus que les données de la couche de base du fait de la dégradation des conditions radio. Cette dernière situation survient par exemple lorsque le terminal UE suit la trajectoire F de la figure et qu'il se retrouve dans la zone de couverture ZC entre les zones de transfert optimal ZT1 et ZT2.

Dans un deuxième mode de mise en oeuvre, le premier dispositif D1 est agencé de manière à fournir immédiatement au réseau d'accès radio RAR, après les avoir reçus du serveur SC et après leur avoir attribué un niveau de priorité élevé, les paquets de données de la couche de base d'un contenu (comme indiqué précédemment) en vue de leur transmission en mode broadcast ou multicast aux terminaux DE qui participent à la session partagée. Les paquets de données de chaque couche d'amélioration de ce même contenu ne sont transmises à un terminal UE participant à la session partagée qu'à condition qu'il se trouve momentanément situé à l'intérieur d'une zone de transfert optimal ZTi.

Dès que le premier dispositif D1 sait qu'un terminal UE, qui participe à une session partagée de transfert d'un contenu, se trouve dans une zone de transfert optimal ZTi, il accède à sa mémoire cache M1 afin de récupérer les paquets de chaque couche d'amélioration de ce contenu. On comprendra qu'il ne récupère que les paquets qui correspondent temporellement aux paquets de la couche de base qui sont en cours de transfert, ainsi que les paquets qui les suivent temporellement. Puis, il fournit au réseau d'accès radio PAR les paquets de données récupérés, après avoir remplacé l'adresse IP de diffusion ou point-à-multipoints contenue dans leur entête par l'adresse IP du terminal UE concerné, et de préférence après leur avoir associé un niveau de priorité fonction d'au moins l'un des paramètres présentés précédemment. Le réseau d'accès radio RAR est ainsi « contraint » par le premier dispositif D1 à retransmettre au terminal UE concerné les paquets fournis en mode unicast, sous forme de rafales de paquets selon un débit de transfert qui est (très) supérieur au débit qui est nécessaire à son application LC pour lire les contenus (conformément au mécanisme de transfert discontinu), et en fonction du niveau de priorité qui leur a été associé.

Dès que !e terminal UE commence à recevoir des paquets de données de la couche de base et de chaque couche d'amélioration d'un contenu, son second dispositif D2 peut commencer à combiner leurs données qui se correspondent temporellement afin de reconstituer le contenu dans la qualité la plus élevée (alors que celle-ci était jusqu'alors de qualité inférieure du fait qu'elle ne reposait que sur les données de la couche de base). Les portions de contenu reconstituées sont successivement transmises par le second dispositif D2 à l'application LC de son terminal UE, sensiblement selon son débit de lecture.

Les données des couches d'amélioration qui sont reçues et qui correspondent temporellement à de futures données de la couche de base, pas encore reçues, sont stockées dans la mémoire M2 dans l'attente de l'arrivée de ces futures données de la couche de base.

Dans un troisième mode de mise en oeuvre, le premier dispositif D1 est également agencé de manière à fournir immédiatement au réseau d'accès radio RAR, après les avoir reçus du serveur SC et après leur avoir attribué un niveau de priorité élevé, les paquets de données de la couche de base d'un contenu (comme indiqué précédemment) en vue de leur transmission en mode broadcast ou multicast aux terminaux UE qui participent à la session partagée.

Les paquets de données de chaque couche d'amélioration de ce même contenu sont également immédiatement transmis à chaque terminal UE participant à la session partagée, mais en mode unicast, dès lors qu'il se trouve situé dans la zone de couverture ZC.

Pour ce faire, le premier dispositif D1 accède à sa mémoire cache M1 afin de récupérer les paquets de chaque couche d'amélioration de ce contenu qui correspondent temporellement, aux paquets de la couche de base qui sont transmis. Puis, pour chaque terminal UE partageant la session, il fournit au réseau d'accès radio RAR les paquets de données récupérés, après avoir remplacé l'adresse IP de diffusion ou point-à-multipoints contenue dans leur entête par l'adresse IP du terminal UE, et de préférence après leur avoir associé un niveau de priorité fonction d'au moins l'un des paramètres présentés précédemment. Le réseau d'accès radio RAR est ainsi « contraint » par le premier dispositif D1 à retransmettre à chaque terminal UE concerné les paquets fournis en mode unicast et en fonction du niveau de priorité qui leur a été associé.

Dès que le terminal UE commence à recevoir des paquets de données de la couche de base et de chaque couche d'amélioration d'un contenu, son second dispositif D2 peut commencer à combiner leurs données qui se correspondent temporellement afin de reconstituer le contenu dans la qualité la plus élevée (alors que celfie-ci était jusqu'alors fie: qualité inférieure du fait qu'elle ne reposait que sur les données de la couche de base). Les portions de contenu reconstituées sont successivement transmises par le second dispositif D2 à l'application LC de son terminal UE, sensiblement selon son débit de lecture.

On notera que cela implique que l'application LC d'un terminal UE ne peut commencer à lire un contenu reçu par son second dispositif D2 qu'après qu'un certain délai se soit écoulé. Il faut en effet que son second dispositif D2 ait commencé à recevoir un certain nombre de paquets de la couche de base d'un contenu pour pourvoir les combiner avec certains des paquets de chaque couche d'amélioration de ce contenu, qu'il a précédemment reçu du fait de leur transmission selon un débit plus élevé (mode rafale).

Par ailleurs, dès que le premier dispositif D1 sait qu'un terminal UE qui participe à une session partagée de transfert d'un contenu se trouve situé dans une zone de transfert optimal ZTi, il décide de lui transmettre désormais les paquets de chaque couche d'amélioration du contenu en mode unicast, sous forme de rafales (conformément au mécanisme de transfert discontinu).

Pour ce faire, le premier dispositif D1 accède à sa mémoire cache M1 afin de récupérer les paquets de chaque couche d'amélioration du contenu concerné, qui correspondent temporellement aux paquets de la couche de base qui sont en cours de transfert, ainsi que les paquets qui les suivent temporellement Puis, il fournit au réseau d'accès radio RAR les paquets de données récupérés, après avoir remplacé l'adresse IP de diffusion ou point-à-multipoints contenue dans leur entête par l'adresse IP du terminal UE concerné, et de préférence après leur avoir associé un niveau de priorité fonction d'au moins l'un des paramètres présentés précédemment. Le réseau d'accès radio RAR est ainsi « contraint » par le premier dispositif D1 à retransmettre au terminal UE concerné les paquets fournis en mode unicast, sous forme de rafales de paquets selon un débit de transfert qui est (très) supérieur au débit qui est nécessaire a son application LC pour lire les contenus (conformément au mécanisme de transfert discontinu), et en fonction du niveau de priorité qui leur a été associé.

Le second dispositif D2 du terminal UE peut alors continuer à combiner les données des paquets de la couche de base et de chaque couche d'amélioration du contenu qui se correspondent temporellement afin de reconstituer le contenu dans la qualité la plus élevée, et il stocke dans la mémoire M2 les données des couches d'amélioration qu'il reçoit et qui correspondent temporellement à de futures données de la couche de base, pas encore reçues, dans l'attente de l'arrivée de ces dernières. Les portions de contenu reconstituées sont successivement transmises par le second dispositif D2 à l'application LC de son terminal UE, sensiblement selon son débit de lecture.

Chaque second dispositif D2 peut par exemple être téléchargeable dans un téléphone mobile UE. Dans ce cas, il peut être réalisé sous la forme de modules logiciels (ou informatiques). Mais, dans une variante il pourrait également être réalisé sous la forme de circuits électroniques ou d'une combinaison de circuits électroniques et de logiciels.

Par ailleurs, le premier dispositif D1, et notamment sa première mémoire M1, peut être également réalisé sous la forme de modules logiciels (ou informatiques). Mais, dans une variante il pourrait être réalisé sous la forme de circuits électroniques ou d'une combinaison de circuits électroniques et de logiciels. On notera également que les différentes fonctionnalités mises en oeuvre par le premier dispositif D1 peuvent être réalisées par des modules (proxy/cache (pour le stockage des données et le remplacement des adresses de destination dans les entêtes des paquets reçus du serveur SC), contrôleur (ou « scheduler ») pour la détermination des niveaux de priorité des paquets et le contrôle des instants de fourniture des paquets au réseau d'accès radio RAR, gestionnaire de cache pour l'adjonction des étiquettes), qui sont éventuellement séparés physiquement bien que couplés les uns aux autres.

Il est important de noter que l'invention peut être également considérée sous l'angle d'un procédé de transfert de contenus pouvant être notamment mis en oeuvre au moyen du réseau radio et du système de transfert de contenus, présentés ci-avant. Les fonctionnalités offertes par la mise en oeuvre du procédé selon l'invention étant identiques à celles offertes par les éléments et équipements de réseau (notamment les premier D1 et second(s) D2 dispositifs) présentés ci-avant, seule la combinaison de fonctionnalités principales offerte par le procédé est présentée ci-après.

Ce procédé de transfert de contenus consiste, lorsque le réseau d'accès radio RAR met en oeuvre un mécanisme de transfert discontinu de contenus du type précité, et en cas de réception de données d'un contenu délivré par le serveur SC :
- à stocker temporairement les données de chaque couche d'amélioration de chaque contenu reçu,
- à fournir au réseau d'accès radio RAR, d'une part, les données de la couche de base du contenu pour qu'il les transmette au terminal UE en mode broadcast ou multicast dans sa zone de couverture ZC, et d'autre part, des données de l'une au moins des couches d'amélioration de ce contenu pour qu'il les transmette au terminal UE en mode broadcast ou multicast et/ou en mode unicast éventuellement selon le mécanisme de transfert discontinu et si ce terminal UE est situé dans l'une de ses zones de transfert optimal ZTi,
- à stocker temporairement dans le terminal UE les données des couches de base et d'amélioration reçues,
- à reconstituer chaque contenu que constituent les données stockées temporairement dans le terminal UE, et
- à communiquer chaque contenu reconstitué à inapplication LC.

L'invention ne se limite pas aux modes de réalisation de système de transfert de contenus, de terminal de communication mobile, d'équipement de réseau et de procédé de transfert de contenus décrits ci-avant, seulement à titre d'exemple, mais elle englobe toutes les variantes que pourra envisager l'homme de l'art dans le cadre des revendications ci-après.

## Revendications

1. Système de transfert de contenus, issus d'un serveur (SC) de contenus agencés en une couche de données de base et au moins une couche de données d'amélioration, vers au moins un terminal de communication mobile (UE) comprenant une application (LC) utilisant des contenus et propre à se connecter à un réseau de communication radio comprenant un réseau d'accès radio (RAR) disposant d'une zone de couverture radio non uniforme (ZC) comportant au moins deux zones de transfert optimal (ZT1 et ZT2), le système comprenant
i) un premier dispositif (D1) agencé pour recevoir les contenus délivrés par ledit serveur (SC), pour stocker temporairement les données de chaque couche d'amélioration de chaque contenu reçu, et pour fournir audit réseau d'accès radio (RAR), d'une part, les données de la couche de base d'un contenu reçu pour qu'il les transmette audit terminal (UE) en mode de diffusion ou point-à-multipoints dans sa zone de couverture (ZC), et d'autre part, des données de l'une au moins des couches d'amélioration de ce contenu reçu pour qu'il les transmette audit terminal (UE) en mode de diffusion ou point-à-multipoints et/ou en mode point-à-point selon un mécanisme de transfert discontinu, offrant dans chaque zone de transfert optimal (ZTi) un débit de transfert supérieur au débit nécessaire à ladite application (LC), et si ce terminal (UE) est situé dans l'une de ses zones de transfert optimal (ZTi), et
ii) au moins un second dispositif (D2) implanté dans ledit terminal (UE) et agencé pour stocker temporairement les données des couches de base et d'amélioration reçues, de manière à reconstituer chaque contenu qu'elles constituent, et pour communiquer chaque contenu reconstitué à ladite application (LC) ;
ledit système étant **caractérisé en ce que** ledit terminal (UE) est agencé pour ne recevoir que des données de la couche de base, lorsque ledit terminal (UE) est situé entre deux desdites zones de transfert optimal,
et que ledit second dispositif (D2) est agencé pour utiliser les données des couches d'amélioration qui correspondent temporellement auxdites données de la couche de base reçues, lorsque ledit terminal (UE) est situé entre deux desdites zones de transfert optimal.

2. Système selon la revendication 1, dans lequel ledit premier dispositif (D1) est agencé i) pour fournir audit réseau d'accès radio (RAR), sous forme de paquets, au moins lors du démarrage du service, les données de la couche de base et de chaque couche d'amélioration de chaque contenu immédiatement après les avoir reçues du serveur (SC) et après leur avoir attribué un niveau de priorité élevé et en ordonnant leur transmission audit terminal (UE) en mode de diffusion ou point-à-multipoints, et ii) lorsque ledit terminal (UE) est momentanément situé dans une zone de transfert optimal (ZTi), pour fournir audit réseau d'accès radio (RAR) des paquets de données de l'une au moins des couches d'amélioration de ce même contenu, non reçues par ledit terminal (UE), après avoir remplacé leur adresse de diffusion ou point-à-multipoints par l'adresse dudit terminal (UE), et après leur avoir associé un niveau de priorité fonction d'au moins un paramètre choisi, et pour ordonner la retransmission audit terminal (UE) desdits paquets fournis en mode point-à-point, sous forme de rafales conformément audit mécanisme de transfert discontinu, et en fonction de leur niveau de priorité associé.

3. Système selon la revendication 1, dans lequel ledit premier dispositif (D1) est agencé i) pour fournir audit réseau d'accès radio (RAR), sous forme de paquets, les données de la couche de base de chaque contenu immédiatement après les avoir reçues du serveur (SC) en leur attribuant un niveau de priorité élevé et en ordonnant leur transmission audit terminal (UE) en mode de diffusion ou point-à-multipoints, et ii) lorsque ledit terminal (UE) est momentanément situé dans une zone de transfert optimal (ZTi), pour fournir audit réseau d'accès radio (RAR) des paquets de données de chaque couche d'amélioration de ce contenu reçu, après avoir remplacé leur adresse de diffusion ou point-à-multipoints par l'adresse dudit terminal (UE), et après leur avoir associé un niveau de priorité fonction d'au moins un paramètre choisi, et pour ordonner la transmission audit terminal (UE) desdits paquets fournis en mode point-à-point, sous forme de rafales conformément audit mécanisme de transfert discontinu, et en fonction de leur niveau de priorité associé.

4. Système selon la revendication 1, dans lequel ledit premier dispositif (D1) est agencé i) pour fournir audit réseau d'accès radio (RAR), sous forme de paquets, les données de la couche de base de chaque contenu immédiatement après les avoir reçues du serveur (SC) en leur attribuant un niveau de priorité élevé et en ordonnant leur transmission audit terminal (UE) en mode de diffusion ou point-à-multipoints, ii) pour fournir audit réseau d'accès radio (RAR), sensiblement en même temps que lesdits paquets de données de la couche de base, les paquets de données de chaque couche d'amélioration de ce contenu reçu, après avoir remplacé leur adresse de diffusion ou point-à-multipoints par l'adresse dudit terminal (UE), et après leur avoir associé un niveau de priorité fonction d'au moins un paramètre choisi, et pour ordonner la transmission audit terminal (UE) desdits paquets fournis en mode point-à-point et en fonction de leur niveau de priorité associé.

5. Système selon la revendication 4, dans lequel ledit premier dispositif (D1) est agencé, lorsqu'il sait que ledit terminal (UE) se trouve situé dans une zone de transfert optimal (ZTi), pour fournir audit réseau d'accès radio (RAR), les paquets de chaque couche d'amélioration du contenu concerné, qui correspondent temporellement aux paquets de la couche de base qui sont en cours de transfert ainsi que des paquets qui les suivent temporellement, après avoir remplacé leur adresse de diffusion ou point-à-multipoints par l'adresse dudit terminal (UE), et après leur avoir associé un niveau de priorité fonction d'au moins un paramètre choisi, et pour ordonner la transmission audit terminal (UE) desdits paquets fournis en mode point-à-point, sous forme de rafales conformément audit mécanisme de transfert discontinu, et en fonction de leur niveau de priorité associé.

6. Système selon l'une des revendications 2 à 5, dans lequel ledit niveau de priorité des paquets d'une rafale destinée à un terminal (UE) est fonction d'au moins un paramètre choisi dans un groupe comprenant au moins la qualité de la liaison radio point-à-point entre ledit réseau d'accès radio (RAR) et ledit terminal (UE), le niveau de remplissage en données de contenu reçues du second dispositif (D2) dudit terminal (UE), et le niveau d'importance de la couche d'amélioration à laquelle appartiennent les paquets de données de ladite rafale.

7. Système selon l'une des revendications 1 à 6, dans lequel ledit premier dispositif (D1) est agencé pour adjoindre à chaque paquet de données de chaque couche d'un contenu une étiquette définissant la couche à laquelle il appartient et le contenu dont il fait partie.

8. Terminal de communication mobile (UE) comprenant une application (LC) utilisant des contenus et propre à se connecter à un réseau de communication radio comprenant un réseau d'accès radio (RAR) disposant d'une zone de couverture radio non uniforme (ZC) comportant au moins deux zones de transfert optimal (ZT1 et ZT2) et mettant en oeuvre un mécanisme de transfert discontinu de contenus, comprenant en outre un second dispositif (D2) faisant partie d'un système de transfert de contenus selon l'une des revendications 1 à 7.

9. Equipement de réseau (ER) pour un réseau de communication radio comprenant un réseau d'accès radio (RAR) disposant d'une zone de couverture radio non uniforme (ZC) comportant au moins deux zones de transfert optimal (ZT1 et ZT2) et mettant en oeuvre un mécanisme de transfert discontinu de contenus, comprenant en outre un premier dispositif (D1) faisant partie d'un système de transfert de contenus selon l'une des revendications 1 à 7.

10. Procédé de transfert de contenus, issus d'un serveur (SC) de contenus agencés en une couche de données de base et au moins une couche de données d'amélioration, vers au moins un terminal de communication mobile (UE) comprenant une application (LC) utilisant des contenus et propre à se connecter à un réseau de communication radio comprenant un réseau d'accès radio (RAR) disposant d'une zone de couverture radio non uniforme (Z) comportant au moins deux zones de transfert optimal (ZT1 et ZT2), comprenant les étapes suivantes, lorsque le réseau d'accès radio (RAR) met en oeuvre un mécanisme de transfert discontinu de contenus, offrant dans chaque zone de transfert optimal (ZTi) un débit de transfert supérieur au débit nécessaire à ladite application (LC), et en cas de réception de données d'un contenu délivré par ledit serveur (SC) : i) stocker temporairement les données de chaque couche d'amélioration de chaque contenu reçu, ii) fournir au réseau d'accès radio (RAR), d'une part, les données de la couche de base dudit contenu pour qu'il les transmette audit terminal (UE) en mode de diffusion ou point-à-multipoints dans sa zone de couverture (ZC), et d'autre part, des données de l'une au moins des couches d'amélioration de ce contenu pour qu'il les transmette audit terminal (UE) en mode de diffusion ou point-à-multipoints et/ou en mode point-à-point selon ledit mécanisme de transfert discontinu et si ce terminal (UE) est situé dans l'une de ses zones de transfert optimal (ZTi), iii) stocker temporairement dans ledit terminal (UE) les données des couches de base et d'amélioration reçues, iv) reconstituer chaque contenu que constituent lesdites données stockées temporairement dans ledit terminal (UE), et v) communiquer chaque contenu reconstitué à ladite application (LC)
ledit procédé étant **caractérisé en ce qu'**il comporte aussi les étapes suivantes ;
vi) recevoir, par ledit terminal (UE), uniquement des données de la couche de base, lorsque ledit terminal (UE) est situé entre deux desdites zones de transfert optimal,
vii) utiliser, par ledit second dispositif (D2), les données des couches d'amélioration qui correspondent temporellement auxdites données de la couche de base reçues, lorsque ledit terminal (UE) est situé entre deux desdites zones de transfert optimal.

11. Procédé selon la revendication 10, dans lequel : i) on fournit audit réseau d'accès radio (RAR), sous forme de paquets, au moins lors du démarrage du service, les données de la couche de base et de chaque couche d'amélioration de chaque contenu immédiatement après les avoir reçues du serveur (SC) et après leur avoir attribué un niveau de priorité élevé en vue de leur transmission audit terminal (UE) en mode de diffusion ou point-à-multipoints, et ii) lorsque ledit terminal (UE) est momentanément situé dans une zone de transfert optimal (ZTi), on fournit audit réseau d'accès radio (RAR), sous forme de rafales de paquets, des données de l'une au moins des couches d'amélioration de ce même contenu, non reçues par ledit terminal (UE), après avoir remplacé leur adresse de diffusion ou point-à-multipoints par l'adresse dudit terminal (UE), et après leur avoir associé un niveau de priorité fonction d'au moins un paramètre choisi, et on transmet audit terminal (UE) lesdites rafales en mode point-à-point conformément audit mécanisme de transfert discontinu, et en fonction de leur niveau de priorité associé.

12. Procédé selon la revendication 10, dans lequel i) on fournit audit réseau d'accès radio (RAR), sous forme de paquets, les données de la couche de base de chaque contenu immédiatement après les avoir reçues du serveur (SC) et après leur avoir attribué un niveau de priorité élevé en vue de leur transmission audit terminal (UE) en mode de diffusion ou point-à-multipoints, et ii) lorsque ledit terminal (UE) est momentanément situé dans une zone de transfert optimal (ZTi), on fournit audit réseau d'accès radio (RAR), sous forme de rafales de paquets, les données de chaque couche d'amélioration de ce contenu reçu, après avoir remplacé leur adresse de diffusion ou point-à-multipoints par l'adresse dudit terminal (UE), et après leur avoir associé un niveau de priorité fonction d'au moins un paramètre choisi, et on transmet audit terminal (UE) lesdites rafales en mode point-à-point conformément audit mécanisme de transfert discontinu, et en fonction de leur niveau de priorité associé.

13. Procédé selon la revendication 10, dans lequel i) on fournit audit réseau d'accès radio (RAR), sous forme de paquets, les données de la couche de base de chaque contenu immédiatement après les avoir reçues du serveur (SC) et après leur avoir attribué un niveau de priorité élevé en vue de leur transmission audit terminal (UE) en mode de diffusion ou point-à-multipoints, et ii) on fournit audit réseau d'accès radio (RAR), sensiblement en même temps que lesdits paquets de données de la couche de base, les paquets de données de chaque couche d'amélioration de ce contenu reçu, après avoir remplacé leur adresse de diffusion ou point-à-multipoints par l'adresse dudit terminal (UE), et après leur avoir associé un niveau de priorité fonction d'au moins un paramètre choisi, et on transmet audit terminal (UE) lesdits paquets fournis en mode point-à-point et en fonction de leur niveau de priorité associé.

14. Procédé selon la revendication 13, dans lequel, lorsque l'on sait que ledit terminal (UE) se trouve situé dans une zone de transfert optimal (ZTi), on fournit audit réseau d'accès radio (RAR) les paquets de chaque couche d'amélioration du contenu concerné, qui correspondent temporellement aux paquets de la couche de base qui sont en cours de transfert ainsi que des paquets qui les suivent temporellement, après avoir remplacé leur adresse de diffusion ou point-à-multipoints par l'adresse dudit terminal (UE), et après leur avoir associé un niveau de priorité fonction d'au moins un paramètre choisi, et on transmet audit terminal (UE) lesdits paquets fournis en mode point-à-point, sous forme de rafales conformément audit mécanisme de transfert discontinu, et en fonction de leur niveau de priorité associé.

15. Procédé selon l'une des revendications 11 à 14, dans lequel ledit niveau de priorité des paquets d'une rafale destinée à un terminal (UE) est fonction d'au moins un paramètre choisi dans un groupe comprenant au moins la qualité de la liaison radio point-à-point entre ledit réseau d'accès radio (RAR) et ledit terminal (UE), le niveau de remplissage en données de contenu reçues du second dispositif (D2) dudit terminal (UE), et le niveau d'importance de la couche d'amélioration à laquelle appartiennent les paquets de données de ladite rafale.

16. Procédé selon l'une des revendications 10 à 15, dans lequel on adjoint à chaque paquet de données de chaque couche d'un contenu reçu dudit serveur (SC) une étiquette définissant la couche à laquelle il appartient et le contenu dont il fait partie.

## Patentansprüche

1. System zum Transfer von Inhalten, die aus einem Server (SC) von Inhalten stammen, die in einer Basisdatenschicht und mindestens einer Verbesserungsdatenschicht eingerichtet sind, zu mindestens einem mobilen Kommunikationsendgerät (UE), das eine Anwendung (LC) umfasst, die Inhalte verwendet und geeignet ist, sich an ein Funkkommunikationsnetz anzuschließen, das ein Funkzugangsnetz (RAR) umfasst, das über eine nicht gleichförmige Funkdeckungszone (ZC) verfügt, die mindestens zwei optimale Transferzonen (ZT1 und ZT2) umfasst, System umfassend
i) eine erste Vorrichtung (D1), die eingerichtet ist, um die Inhalte zu empfangen, die von dem besagten Server (SC) geliefert werden, um die Daten jeder Verbesserungsschicht jedes empfangenen Inhalts vorübergehend zu speichern, und um dem besagten Funkzugangsnetz (RAR) einerseits die Daten der Basisschicht eines empfangenen Inhalts zu liefern, damit es sie an das besagte Endgerät (UE) im Verbreitungs- oder Punkt-zu-Mehrpunkt-Modus in seiner Deckungszone (ZC) überträgt, und andererseits Daten mindestens einer der Verbesserungsschichten dieses empfangenen Inhalts, damit es sie an das besagte Endgerät (UE) im Verbreitungs- oder Punkt-zu-Mehrpunkt- und/oder Punkt-zu-Punkt-Modus gemäß einem diskontinuierlichen Transfermechanismus überträgt, der in jeder optimalen Transferzone (ZTi) einen Datendurchsatz bietet, der höher ist als der Durchsatz, der für die besagte Anwendung (LC) erforderlich ist, und, falls sich dieses Endgerät (UE) in einer seiner optimalen Transferzonen (ZTi) befindet, und
ii) mindestens eine zweite Vorrichtung (D2), die in dem besagten Endgerät (UE) eingebaut und eingerichtet ist, um vorübergehend die empfangenen Daten der Basisschicht und Verbesserungsschicht derart zu speichern, dass jeder Inhalt, den sie bilden, rekonstituiert wird, und um jeden rekonstituierten Inhalt der besagten Anwendung (LC) zu kommunizieren;
wobei das besagte System **dadurch gekennzeichnet ist, dass** das besagte Endgerät (UE) eingerichtet ist, um nur Daten der Basisschicht zu empfangen, wenn sich das besagte Endgerät (UE) zwischen zwei der besagten optimalen Transferzonen befindet,
und wobei die besagte zweite Vorrichtung (D2) eingerichtet ist, um die Daten der Verbesserungsschichten zu verwenden, die zeitlich den besagten empfangenen Daten der Basisschicht entsprechen, wenn sich das besagte Endgerät (UE) zwischen zwei der besagten optimalen Transferzonen befindet.

2. System nach Anspruch 1, wobei die besagte erste Vorrichtung (D1) eingerichtet ist, um i) dem besagten Funkzugangsnetz (RAR) in Form von Paketen mindestens beim Beginn des Dienstes die Daten der Basisschicht und jeder Verbesserungsschicht jedes Inhalts sofort nach deren Empfang von dem Server (SC) und nachdem ihnen ein hohes Prioritätsniveaus zugewiesen wurde, und indem ihre Übertragung an das besagte Endgerät (UE) im Verbreitungs- oder Punkt-zu-Mehrpunkt-Modus angeordnet wird, und ii), wenn sich das besagte Endgerät (UE) vorübergehend in einer optimalen Transferzone (ZTi) befindet, dem besagten Funkzugangsnetz (RAR) Datenpakete mindestens einer der Verbesserungsschichten mit ein und demselben Inhalt zu liefern, die von dem besagten Endgerät (UE) nicht empfangen wurden, nachdem ihre Verbreitungs- oder Punkt-zu-Mehrpunkt-Adresse mit der Adresse des besagten Endgeräts (UE) ersetzt wurde, und nachdem mit ihnen ein Prioritätsniveau assoziiert wurde, das von mindestens einem ausgewählten Parameter abhängt, und um die Weiterübertragung zu dem besagten Endgerät (UE) der besagten gelieferten Pakete Punkt-zu-Mehrpunkt-Modus in Form von Bursts gemäß dem besagten diskontinuierlichen Transfermechanismus und in Abhängigkeit von ihrem assoziierten Prioritätsniveau anzuordnen.

3. System nach Anspruch 1, wobei die besagte erste Vorrichtung (D1) eingerichtet ist, um i) dem besagten Funkzugangsnetz (RAR) in Form von Paketen die Daten der Basisschicht jedes Inhalts sofort nach deren Empfang von dem Server (SC) und indem ihnen ein hohes Prioritätsniveaus zugewiesen wurde zu liefern und indem ihre Übertragung an das besagte Endgerät (UE) im Verbreitungs- oder Punkt-zu-Mehrpunkt-Modus angeordnet wird, und ii), wenn sich das besagte Endgerät (UE) vorübergehend in einer optimalen Transferzone (ZTi) befindet, dem besagten Funkzugangsnetz (RAR) Datenpakete jeder Verbesserungsschicht dieses empfangenen Inhalts zu liefern, nachdem ihre Verbreitungs- oder Punkt-zu-Mehrpunkt-Adresse mit der Adresse des besagten Endgeräts (UE) ersetzt wurde, und nachdem mit ihnen ein Prioritätsniveau assoziiert wurde, das von mindestens einem ausgewählten Parameter abhängt, und um die Übertragung zu dem besagten Endgerät (UE) der besagten gelieferten Pakete im Punkt-zu-Punkt-Modus in Form von Bursts gemäß dem besagten diskontinuierlichen Transfermechanismus und in Abhängigkeit von ihrem assoziierten Prioritätsniveau anzuordnen.

4. System nach Anspruch 1, wobei die besagte erste Vorrichtung (D1) eingerichtet ist, um i) dem besagten Funkzugangsnetz (RAR) in Form von Paketen die Daten der Basisschicht jedes Inhalts sofort nach deren Empfang von dem Server (SC) und indem ihnen ein hohes Prioritätsniveau zugewiesen wurde zu liefern und indem ihre Übertragung an das besagte Endgerät (UE) im Verbreitungs- oder Punkt-zu-Mehrpunkt-Modus angeordnet wird, und ii), um dem besagten Funkzugangsnetz (RAR) im Wesentlichen gleichzeitig mit den besagten Datenpaketen der Basisschicht die Datenpakete jeder Verbesserungsschicht dieses empfangenen Inhalts zu liefern, nachdem ihre Verbreitungs- oder Punkt-zu-Mehrpunkt-Adresse mit der Adresse des besagten Endgeräts (UE) ersetzt wurde, und nachdem mit ihnen ein Prioritätsniveau assoziiert wurde, das von mindestens einem ausgewählten Parameter abhängt, und um die Übertragung zu dem besagten Endgerät (UE) der besagten gelieferten Pakete im Punkt-zu-Punkt-Modus und in Abhängigkeit von ihrem assoziierten Prioritätsniveau anzuordnen.

5. System nach Anspruch 4, wobei die besagte erste Vorrichtung (D1), wenn sie weiß, dass sich das besagte Endgerät (UE) in einer optimalen Transferzone (ZTi) befindet, eingerichtet ist, um dem besagten Funkzugangsnetz (RAR) die Pakete jeder Verbesserungsschicht des betreffenden Inhalts, die zeitlich den Paketen der Basisschicht entsprechen, die im Transfer befindlich sind, sowie Pakete, die ihnen zeitlich folgen, zu liefern, nachdem ihre Verbreitungs- oder Punkt-zu-Mehrpunkt-Adresse durch die Adresse des besagten Endgeräts (UE) ersetzt wurde, und nachdem mit ihnen ein Prioritätsniveau in Abhängigkeit von mindestens einem ausgewählten Parameter assoziiert wurde, und um die Übertragung zu dem besagten Endgerät (UE) der gelieferten Pakete im Punkt-zu-Punkt-Modus in Form von Bursts gemäß dem besagten diskontinuierlichen Transfermechanismus und in Abhängigkeit von ihrem assoziierten Prioritätsniveau anzuordnen.

6. System nach einem der Ansprüche 2 bis 5, wobei das besagte Prioritätsniveau der Pakete eines Bursts, der für ein Endgerät (UE) bestimmt ist, von mindestens einem Parameter abhängt, der aus einer Gruppe ausgewählt wird, die mindestens die Qualität der Punkt-zu-Punkt-Funkverbindung zwischen dem besagten Funkzugangsnetz (RAR) und dem besagten Endgerät (UE), das Füllniveau mit empfangenen Inhaltsdaten der zweiten Vorrichtung (D2) des besagten Endgeräts (UE) und das Bedeutungsniveau der Verbesserungsschicht, zu der die Datenpakete des besagten Bursts gehören, besteht.

7. System nach einem der Ansprüche 1 bis 6, wobei die besagte erste Vorrichtung (D1) eingerichtet ist, um jedem Datenpaket jeder Schicht eines Inhalts ein Etikett hinzuzufügen, das die Schicht, zu der es gehört, und den Inhalt, von dem es ein Teil ist, definiert.

8. Mobiles Datenendgerät (UE), das eine Anwendung (LC) umfasst, die Inhalte verwendet und geeignet ist, sich an ein Funkkommunikationsnetz anzuschließen, das ein Funkzugangsnetz (RAR) umfasst, das über eine nicht gleichmäßige Funkdeckungszone (ZC) verfügt, die mindestens zwei optimale Transferzonen (ZT1 und ZT2) umfasst und einen diskontinuierlichen Transfermechanismus von Inhalten umsetzt, das außerdem eine zweite Vorrichtung (D2) umfasst, die Teil eines Transfersystems von Inhalten nach einem der Ansprüche 1 bis 7 ist.

9. Netzausstattung (ER) für ein Funkkommunikationsnetz, das ein Funkzugangsnetz (RAR) umfasst, das über eine nicht gleichmäßige Funkdeckungszone (ZC) verfügt, die mindestens zwei optimale Transferzonen (ZT1 und ZT2) umfasst und einen diskontinuierlichen Transfermechanismus von Inhalten umsetzt, das außerdem eine erste Vorrichtung (D1) umfasst, die Teil eines Transfersystems von Inhalten nach einem der Ansprüche 1 bis 7 ist.

10. Verfahren zum Transfer von Inhalten, die aus einem Server (SC) von Inhalten stammen, die in einer Basisdatenschicht und mindestens einer Verbesserungsdatenschicht eingerichtet sind, zu mindestens einem mobilen Kommunikationsendgerät (UE), das eine Anwendung (LC) umfasst, die Inhalte verwendet und geeignet ist, sich an ein Funkkommunikationsnetz anzuschließen, das ein Funkzugangsnetz (RAR) umfasst, das über eine nicht gleichförmige Funkdeckungszone (Z) verfügt, die mindestens zwei optimale Transferzonen (ZT1 und ZT2) umfasst, das die folgenden Schritte umfasst, wenn das Funkzugangsnetz (RAR) einen diskontinuierlichen Transfermechanismus von Inhalten umsetzt, der in jeder optimalen Transferzone (ZTi) einen Transferdurchsatz bietet, der höher ist als der für die besagte Anwendung (LC) erforderliche Durchsatz, und im Fall des Empfangs von Daten eines Inhalts, der von dem Server (SC) geliefert wird: i) die Daten jeder Verbesserungsschicht jedes empfangenen Inhalts vorübergehend zu speichern, ii) dem Funkzugangsnetz (RAR) einerseits die Daten der Basisschicht des Inhalts zu liefern, damit es sie dem Endgerät (UE) im Verbreitungsmodus oder im Punkt-zu-Mehrpunkt-Modus in seiner Deckungszone (ZC) überträgt, und, andererseits, Daten mindestens einer der Verbesserungsschichten dieses Inhalts, damit es sie in dem besagten Endgerät (UE) im Verbreitungs- oder Punkt-zu-Mehrpunkt- und/oder im Punkt-zu-Punkt-Modus gemäß dem diskontinuierlichen Transfermechanismus überträgt, und, falls sich dieses Endgerät (UE) in einer seiner optimalen Transferzonen (ZTi) befindet, iii) in dem besagten Endgerät (UE) die empfangenen Daten der Basis- und Verbesserungsschicht vorübergehend zu speichern,
iv) jeden Inhalt, den die vorübergehend in dem besagten Endgerät (UE) gespeicherten Daten bilden, zu rekonstituieren und v) jeden konstituierten Inhalt zu der Anwendung (LC) zu kommunizieren,
besagtes Verfahren **dadurch gekennzeichnet, dass** es auch die folgenden Schritte umfasst:
vi) durch das besagte Endgerät (UE) Empfangen nur der Daten der Basisschicht, wenn sich das besagte Endgerät (UE) zwischen zwei der besagten optimalen Transferzonen befindet,
vii) Verwenden durch die besagte zweite Vorrichtung (D2) der Daten der Verbesserungsschichten, die zeitlich den besagten empfangenen Daten der Basisschicht entsprechen, wenn sich das besagte Endgerät (UE) zwischen zwei der besagten optimalen Transferzonen befindet.

11. Verfahren nach Anspruch 10, wobei: i) man dem besagten Funkzugangsnetz (RAR) in Form von Paketen mindestens bei Beginn die Daten der Basisschicht und jeder Verbesserungsschicht jedes Inhalts sofort nachdem sie von dem Server (SC) empfangen wurden und nachdem ihnen ein hohes Prioritätsniveau für ihre Übertragung zu dem besagten Endgerät (UE) im Verbreitungs- oder Punkt-zu-Mehrpunkt-Modus zugewiesen wurde, liefert, und, ii) wenn sich das besagte Endgerät (UE) vorübergehend in einer optimalen Transferzone (ZTi) befindet, man dem besagten Funkzugangsnetz (RAR) in Form von Bursts von Paketen Daten mindestens einer der Verbesserungsschichten mit ein und demselben Inhalt, die von dem besagten Endgerät (UE) nicht empfangen wurden, liefert, nachdem ihre Verbreitungs- oder Punkt-zu-Mehrfachpunkt-Adresse mit der Adresse des besagten Endgeräts (UE) ersetzt wurde und nachdem mit ihnen ein Prioritätsniveau in Abhängigkeit von mindestens einem ausgewählten Parameter assoziiert wurde, und man dem besagten Endgerät (UE) die besagten Bursts im Punkt-zu-Punkt-Modus gemäß dem diskontinuierlichen Transfermechanismus und in Abhängigkeit von ihrem assoziierten Prioritätsniveau überträgt.

12. Verfahren nach Anspruch 10, wobei i) man dem Funkzugangsnetz (RAR) in Form von Paketen die Daten der Basisschicht jedes Inhalts sofort nachdem sie von dem Server (SC) empfangen wurden und nachdem ihnen ein hohes Prioritätsniveau für ihre Übertragung zu dem Endgerät (UE) im Verbreitungs- oder Punkt-zu-Mehrpunkt-Modus zugewiesen wurde, liefert, und, ii) wenn sich das Endgerät (UE) vorübergehend in einer optimalen Transferzone (ZTi) befindet, dem Funkzugangsnetz (RAR) in Form von Bursts von Paketen die Daten jeder Verbesserungsschicht dieses empfangenen Inhalts liefert, nachdem ihre Verbreitungs- oder Punkt-zu-Mehrpunkt-Adresse durch die Adresse des besagten Endgeräts (UE) ersetzt wurde, und nachdem mit ihnen ein Prioritätsniveau in Abhängigkeit von mindestens einem Parameter assoziiert wurde, und man dem besagten Endgerät (UE) die besagten Bursts im Punkt-zu-Punkt-Modus gemäß dem diskontinuierlichen Transfermechanismus und in Abhängigkeit von ihrem assoziierten Prioritätsniveau überträgt.

13. Verfahren nach Anspruch 10, wobei i) man dem besagten Funkzugangsnetz (RAR) in Form von Paketen die Daten der Basisschicht jedes Inhalts sofort nachdem sie von dem Server (SC) empfangen wurden und nachdem ihnen ein hohes Prioritätsniveau für ihre Übertragung zu dem besagten Endgerät (UE) im Verbreitungs- oder Punkt-zu-Mehrpunkt-Modus zugewiesen wurde, liefert, und ii) man dem Funkzugangsnetz (RAR) im Wesentlichen gleichzeitig mit den besagten Datenpaketen der Basisschicht die Datenpakete jeder Verbesserungsschicht dieses empfangenen Inhalts liefert, nachdem ihre Verbreitungs- oder Punkt-zu-Mehrpunkt-Adresse mit der Adresse des besagten Endgeräts (UE) ersetzt wurde, und nachdem mit ihnen ein Prioritätsniveau in Abhängigkeit von mindestens einem ausgewählten Parameter assoziiert wurde, und man dem besagten Endgerät (UE) die gelieferten Pakete im Punkt-zu-Punkt-Modus in Abhängigkeit von ihrem assoziierten Prioritätsniveau liefert.

14. Verfahren nach Anspruch 13, wobei, wenn man weiß, dass sich das besagte Endgerät (UE) in einer optimalen Transferzone (ZTi) befindet, man dem Funkzugangsnetz (RAR) die Pakete jeder Verbesserungsschicht des betreffenden Inhalts, die zeitlich den Paketen der Basisschicht entsprechen, die im Transfer befindlich sind, sowie Pakete, die zeitlich auf sie folgen, nachdem ihre Verbreitungs- oder Punkt-zu-Mehrpunkt-Adresse-Adresse durch die Adresse des besagten Endgeräts (UE) ersetzt wurde, und nachdem mit ihnen ein Prioritätsniveau in Abhängigkeit von mindestens einem ausgewählten Parameter assoziiert wurde, liefert, und man dem besagten Endgerät (UE) die besagten gelieferten Pakete im Punkt-zu-Punkt-Modus in Form von Bursts gemäß dem diskontinuierlichen Transfermechanismus und in Abhängigkeit von ihrem assoziierten Prioritätsniveau überträgt.

15. Verfahren nach einem der Ansprüche 11 bis 14, wobei das besagte Prioritätsniveau der Pakete eines Bursts, der für ein Endgerät (UE) bestimmt ist, von mindestens einem Parameter abhängt, der aus einer Gruppe ausgewählt wird, die mindestens die Qualität der Punkt-zu-Punkt-Funkverbindung zwischen dem besagten Funkzugangsnetz (RAR) und dem besagten Endgerät (UE), dem Füllniveau mit empfangenen Inhaltsdaten der zweiten Vorrichtung (D2) des besagten Endgeräts (UE) und dem Bedeutungsniveau der Verbesserungsschicht, zu der die Datenpakete des besagten Bursts gehören, besteht.

16. Verfahren nach einem der Ansprüche 10 bis 15, wobei man jedem Datenpaket jeder Schicht eines von dem besagten Server (SC) empfangenen Inhalts ein Etikett, das die Schicht, zu der es gehört, und den Inhalt, von dem es ein Teil ist, definiert, hinzufügt.

## Claims

1. A system for transferring content, from a server (SC) of content arranged in a base layer of data and at least one enhancement layer of data, to at least one mobile communication terminal (UE) comprising an application (LC) using content and capable of connecting to a radio communication network comprising a radio access network (RAR) having a non-uniform radio coverage area (ZC) comprising at least two optimal transfer zones (ZT1 and ZT2), the system comprising:
i) a first device (D1) arranged to receive the content delivered by said server (SC), to temporarily store the data from each enhancement layer of each piece of content received, and to supply said radio access network (RAR) firstly with the data from the base layer of a received piece of content so that it can transmit that data to said terminal (UE) in broadcast or multicast mode within its coverage area (ZC), and secondly with data from at least one of the enhancement layers of that received piece of content so that it can transmit that data to said terminal (UE) in broadcast or multicast mode and/or in point-to-point mode by a discontinuous transfer mechanism, offering within each optimal transfer area (ZTi) a transfer rate greater than the rate needed by said application (LC), and if that terminal (UE) is located in one of its optimal transfer areas (ZTi), and
ii) at least one second device (D2) installed in said terminal (UE) and arranged to temporarily store the received data from the base and enhancement layers, so as to reconstitute each piece of content that they constitute, and to communicate each reconstituted piece of content to said application (LC);
said system being **characterized in that** said terminal (UE) is arranged to receive only data from the base layer, when said terminal (UE) is located between two of said optimal transfer areas,
and that said second device (D2) is arranged to use the data from the enhancement layers that temporally correspond to said received data from the base layer, when said terminal (UE) is located between two of said optimal transfer areas.

2. A system according to claim 1, wherein said first device (D1) is arranged i) to provide to said radio access network (RAR), in the form of packets, at least during the start of the service, the data from the base layer and from each enhancement layer of each piece of content immediately after having received that data from the server (SC) and after having assigned them a high priority level and ordered their transmission to said terminal (UE) in broadcast or multicast mode, and ii) when said terminal (UE) is momentarily located in an optimal transfer area (Zti), to provide said radio access network (RAR) with data packets from at least one of the enhancement layers of that same piece of content, not received by said terminal (UE), after having replaced their broadcast or multicast address with the address of said terminal (UE), and after having assigned them a priority level based on at least one chosen parameter, and to order the retransmission to said terminal (UE) of said provided packets in point-to-point mode, in the form of bursts in accordance with said discontinuous transfer mechanism, and based on their assigned priority level.

3. A system according to claim 1, wherein said first device (D1) is arranged i) to provide said radio access network (RAR), in the form of packets, the data from the base layer and from each enhancement layer of each piece of content immediately after having received that data from the server (SC) and after having assigned them a high priority level and ordered their transmission to said terminal (UE) in broadcast or multicast mode, and ii) when said terminal (UE) is momentarily located in an optimal transfer area (ZTi), to provide said radio access network (RAR) with data packets from each enhancement layer of that received content, after having replaced their broadcast or multicast address with the address of said terminal (UE), and after having assigned them a priority level based on at least one chosen parameter, and to order the transmission to said terminal (UE) of said provided packets in point-to-point mode, in the form of bursts in accordance with said discontinuous transfer mechanism, and based on their assigned priority level.

4. A system according to claim 1, wherein said first device (D1) is arranged i) to provide said radio access network (RAR), in the form of packets, the data from the base layer of each piece of content immediately after having received that data from the server (SC) and after having assigned them a high priority level and ordered their transmission to said terminal (UE) in broadcast or multicast mode, ii) to provide said radio access network (RAR), substantially at the same time as said data packets from the base layer, the data packets from each enhancement layer of that received content, after having replaced their broadcast or multicast address with the address of said terminal (UE), and after having assigned them a priority level based on at least one chosen parameter, and to order the transmission to said terminal (UE) of said provided packets in point-to-point mode and based on their assigned priority level.

5. A system according to claim 4, wherein said first device (D1) is arranged, when it knows that said terminal (UE) is in an optimal transfer area (ZTi), to provide said radio access network (RAR) with packets from each enhancement layer of the content in question, which temporally corresponds to the packets from the base layer that are being transferred as well as packets that follow them temporally, after having replaced their broadcast or multicast address with the address of said terminal (UE), and after having assigned them a priority level based on at least one chosen parameter, and to order the transmission to said terminal (UE) of said provided packets in point-to-point mode, in the form of bursts in accordance with said discontinuous transfer mechanism, and based on their assigned priority level.

6. A system according to one of the claims 2 to 5, wherein said priority level of the packets of a burst intended for a terminal (UE) is based on at least one parameter chosen from a group comprising at least the quality of the point-to-point radio link between said radio access network (RAR) and said terminal (UE), the level filled with content data received from the second device (D2) of said terminal (UE), and the level of importance of the enhancement layer to which the data packets of said burst belong.

7. A system according to one of the claims 1 to 6, wherein said first device (D1) is arranged to attach to each data packet of each layer of a piece of content, a label defining the layer to which it belongs and the content of which it is a part.

8. A mobile communication terminal (UE) comprising an application (LC) using content and able to connect to a radio communication network comprising a radio access network (RAR) having a non-uniform radio coverage area (ZC) comprising at least two optimal transfer areas (ZT1 and ZT2) and implementing a discontinuous content transfer mechanism, further comprising a second device (D2) forming part of a system for transferring content according to one of the claims 1 to 7.

9. A network equipment (ER) for a radio communication network comprising a radio access network (RAR) having a non-uniform radio coverage area (ZC) comprising at least two optimal transfer areas (ZT1 and ZT2) and implementing a discontinuous content transfer mechanism, further comprising a first device (D1) forming part of a system for transferring content according to one of the claims 1 to 7.

10. A method for transferring content, from a server (SC) of content arranged in a base layer of data and at least one enhancement layer of data, to at least one mobile communication terminal (UE) comprising an application (LC) using content and capable of connecting to a radio communication network comprising a radio access network (RAR) having a non-uniform radio coverage area (Z) comprising at least two optimal transfer zones (ZT1 and ZT2), comprising the following steps, when the radio access network (RAR) implements a discontinuous content transfer mechanism, offering in each optimal transfer area (ZTi) a transfer rate greater than the rate needed by said application (LC), and when data of a piece of content is received by said server (SC): i) temporarily storing the data from each enhancement layer of each piece of content received, ii) providing the radio access network (RAR), firstly, with the data from the base layer of said content so that it can transmit that data to said terminal (UE) in broadcast or point-to-point mode within its coverage area (ZC), and secondly, data from at least one of the enhancement layers of that content so that it can transmit them to said terminal (UE) in broadcast or point-to-multipoint mode and/or in point-to-point mode based on said discontinuous transfer mechanism and if that terminal (UE) is located in one of its optimal transfer areas (ZTi), iii) temporarily storing within said terminal (UE) the data from the received base and enhancement layers, iv) reconstituting each piece of content that said temporarily stored data constitutes in said terminal (UE), and v) communicating each reconstituted piece of content to said application (LC)
said method being **characterized in that** it further comprises the following steps:
vi) receiving, by said terminal (UE), only data from the base layer, when said terminal (UE) is located between two of said optimal transfer areas,
vii) using, by said second device (D2), data from the enhancement layers that temporally correspond to said received data from the base layer, when said terminal (UE) is located between two of said optimal transfer areas.

11. A method according to claim 10, wherein: i) said radio access network (RAR) is provided, in the form of packets, at least when the service starts, with the data from the base layer and from each enhancement layer of each piece of content immediately after having received them from the server (SC) and after having assigned them a high priority level in view of their transmission to said terminal (UE) in broadcast or multicast mode, and ii) when said terminal (UE) is momentarily located in an optimal transfer area (ZTi), said radio access network (RAR) is provided, in the form of bursts of packets, with the data from at least one of the enhancement layers of that same piece of content, which had not been received by said terminal (UE), after having replaced their broadcast or multicast address with the address of said terminal (UE), and after having assigned them a priority level based on at least one chosen parameter, and said bursts are transmitted to said terminal (UE) in point-to-point mode in accordance with said discontinuous transfer mechanism, and based on their assigned level of priority.

12. A method according to claim 10, wherein i) said radio access network (RAR) is provided, in the form of packets, with the data from the base layer of each piece of content immediately after having received them from the server (SC) and after having assigned them a high priority level in view of their transmission to said terminal (UE) in broadcast or multicast mode, and ii) when said terminal (UE) is momentarily located in an optimal transfer area (ZTi), said radio access network (RAR) is provided, in the form of bursts of packets, with the data from each enhancement layer of that received piece of content, after having replaced their broadcast or multicast address with the address of said terminal (UE), and after having assigned them a priority level based on at least one chosen parameter, and said bursts are transmitted to said terminal (UE) in point-to-point mode in accordance with said discontinuous transfer mechanism, and based on their assigned level of priority.

13. A method according to claim 10, wherein i) said radio access network (RAR) is provided, in the form of packets, with the data from the base layer of each piece of content immediately after having received them from the server (SC) and after having assigned them a high priority level in view of their transmission to said terminal (UE) in broadcast or multicast mode, and ii) said radio access network (RAR) is provided, substantially at the same time as said data packets from the base layer, with the packets of data from each enhancement layer of that received piece of content, after having replaced their broadcast or multicast address with the address of said terminal (UE), and after having assigned them a priority level based on at least one chosen parameter, and said provided packets are transmitted to said terminal (UE) in point-to-point mode based on their assigned level of priority.

14. A method according to claim 13, wherein, when it is known that said terminal (UE) is located in an optimal transfer area (ZTi), said radio access network (RAR) is provided with the packets from each enhancement layer of the content in question, which temporally correspond to the packets of the base layer that are being transferred as well as the packets that follow them temporally, after having replaced their broadcast or multicast address with the address of said terminal (UE), and after having assigned them a priority level based on at least one chosen parameter, and said provided packets are transmitted to said terminal (UE) in point-to-point mode in accordance with said discontinuous transfer mechanism, and based on their assigned level of priority.

15. A method according to one of the claims 11 to 14, wherein said priority level of the packets of a burst intended for a terminal (UE) is based on at least one parameter chosen from a group comprising at least the quality of the point-to-point radio link between said radio access network (RAR) and said terminal (UE), the level filled with content data received from the second device (D2) of said terminal (UE), and the level of importance of the enhancement layer to which the data packets of said burst belong.

16. A method according to one of the claims 10 to 15, wherein a label is added to each data packet of each layer of a piece of content received from said server (SC), defining the layer to which it belongs and of which the content forms part.
